# EUROPÄISCHE PATENTSCHRIFT

(11) **EP 3 303 454 B1**
(45) Veröffentlichungstag und Bekanntmachung des Hinweises auf die Patenterteilung: **26.09.2018**
(21) Anmeldenummer: 16728866.1
(22) Anmeldetag: 30.05.2016
(51) Int. Cl.: C08G 77/388

(54) **VERFAHREN ZUR HERSTELLUNG VON AMINOSÄURE-GRUPPIERUNGEN AUFWEISENDEN ORGANOSILICIUMVERBINDUNGEN**
METHOD FOR PRODUCING ORGANOSILICON COMPOUNDS HAVING AMINO ACID GROUPS
PROCÉDÉ DE PRODUCTION DE COMPOSÉS D'ORGANOSILICIUM PRÉSENTANT DES GROUPES D'ACIDES AMINÉS

(30) Priorität: 02.06.2015 DE 102015210173
(43) Veröffentlichungstag der Anmeldung: 11.04.2018
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE)
(74) Vertreter: Fritz, Helmut
(86) Internationale Anmeldenummer: PCT/EP2016/062102
(87) Internationale Veröffentlichungsnummer: WO 2016/193188

(56) Entgegenhaltungen:
- EP-A1- 2 826 806

## Beschreibung

Die Erfindung betrifft ein einfaches Verfahren zur Herstellung von Aminosäure-Gruppierungen aufweisenden Organosiliciumverbindungen.

Aminogruppen-aufweisende Organosiliciumverbindungen spielen in der Technik eine wichtige Rolle. Durch die Anwesenheit der polaren Aminogruppe in einem Polysiloxan wird beispielweise die Wechselwirkung mit polaren Oberflächen und damit die Haftfähigkeit des Polysiloxans stark erhöht. Hieraus ergeben sich vielfache technische Anwendungsmöglichkeiten, z.B. im Bereich der Textilausrüstung oder in der Kosmetik. In diesem Zusammenhang sind auch Aminosäure-funktionalisierte Organosiliciumverbindungen hochinteressant, da durch die zusätzliche Anwesenheit der Carbonsäure-Gruppierung eine noch viel höhere Polarität erreicht werden kann.
Ein weiterer positiver Aspekt ist es, dass zu ihrer Herstellung die breite und zugleich kostengünstige Rohstoffbasis der technisch verfügbaren Aminosäuren genutzt werden kann. Der ganz überwiegende Teil der Aminosäuren wird aus nachwachsenden Rohstoffen erzeugt, so dass die Produktklasse der eine Aminosäure-Gruppierung aufweisenden Organosiliciumverbindungen auch unter dem Aspekt der Nachhaltigkeit Vorteile bietet.

Verschiedene Verfahren zur Darstellung Aminosäure-funktionalisierter Polysiloxane sind bereits bekannt. Von Interesse sind in erster Linie Aminosäure-funktionelle Organosiliciumverbindungen, bei denen der basische Charakter der Aminogruppierung auch nach der Verknüpfung mit dem Polysiloxan erhalten bleibt. Dies ist insbesondere bei der Verknüpfung der Aminosäure mit dem Polysiloxan durch Addition an eine reaktive Epoxyd-Gruppierung am Polysiloxan gegeben.

Nach diesem Prinzip sind in EP 2826806, EP 2231752, DE 10036532 und JP 52-114699 verschiedene Herstellvarianten für Aminosäure-funktionelle Polysiloxane beschrieben.

Nach dem Stand der Technik werden die Umsetzungen stets mit 1 Mol Aminosäure pro Mol Epoxid-Gruppierung durchgeführt. Folgt man dieser technischen Anweisung, so werden jedoch Produkte erhalten, die eine schlechte Löslichkeit besitzen oder welche unlösliche Bestandteile aufweisen.
Für die technische Anwendbarkeit der Aminosäure-funktionellen Siloxane in verschiedenen Applikationsfeldern spielt jedoch die Löslichkeit eine wichtige Rolle. Schwer- oder sogar unlösliche Produkte können z.B. nicht gleichmäßig oder in einer gewünschten niedrigen Konzentration appliziert werden. Dies führt häufig zu einem Mehrverbrauch und ist damit nicht wirtschaftlich. Zum anderen wird die Reindarstellung der Produkte enorm erschwert. Inhomogenitäten können zur Abschwächung oder zum Verlust der technisch erforderlichen Eigenschaften führen oder auch unerwünschte Nebenwirkungen haben.

Eine unzureichende Löslichkeit kommt insbesondere bei den technisch interessanten höhermolekularen Systemen zum Tragen, da die Löslichkeit in der Regel mit steigendem Molekulargewicht abnimmt.

Die aufgezeigte Löslichkeitsproblematik wird in der EP 2826806 dadurch umgangen, dass die Aminosäuregruppierung als Salz eines organischen Kations, beispielsweise eines quartären Ammonium- oder Phosphonium-Kations mit langkettigem Alkylrest, welcher die Löslichkeit des Systems erhöht, eingebracht wird. Von großem Nachteil ist hierbei, dass bei dem Verfahren die Aminosäuren zunächst über einen zweistufigen Prozess in die quartären Ammonium- oder die Phosphoniumsalze überführt werden müssen, bevor die eigentliche Umsetzung mit dem Polysiloxan erfolgt. Außerdem sind die quartären Ammonium- bzw. Phosphoniumverbindungen ausgesprochen teure Komponenten. Aufgrund der bioziden Wirkung und der schlechten biologischen Abbaubarkeit der quartären Ammoniumsalze ist der Einsatz dieser Verbindungsklasse außerdem umstritten.

In dem in der EP 2231753 beschriebenen Verfahren wird die Löslichkeitsproblematik dadurch umgangen, dass die Umsetzung in Anwesenheit eines Emulgators in wässriger Emulsion und a priori in heterogener Phase durchgeführt wird. Bevorzugt werden bei diesem Verfahren Polyether-Gruppierungen enthaltende Polysiloxane eingesetzt, die die Tendenz zur Bildung von stabilen Emulsionen stark erhöhen.
Von Nachteil ist bei diesem Verfahren, dass das gebildete Aminosäure-Gruppen-tragende Siloxan stets im Gemisch mit einem Emulgator anfällt, der vom Produkt nicht abgetrennt werden kann. Die erhaltenen Produkte können nach dieser Anweisung nicht in reiner Form isoliert werden. Dies bedeutet eine Einschränkung des Anwendungsbereichs.

Gegenstand der vorliegenden Erfindung ist ein Verfahren zur Herstellung von Aminosäure-Gruppierung enthaltenden Organosiliciumverbindungen (O), bei dem Epoxydeinheiten tragende Organosiliciumverbindungen mit einem stöchiometrischen Überschuss an Aminosäuren oder deren Salzen in Gegenwart eines Alkohols umgesetzt werden, wobei pro Mol der vorhandenen Epoxydeinheiten mindestens 1,2 Mol und höchstens 100 Mol der Aminosäuren eingesetzt werden.

Überraschend wurde gefunden, dass die Umsetzung von Epoxid-Gruppierungen tragenden Organosiliciumverbindungen mit einem stöchiometrischen Überschuss an Aminosäure in Gegenwart von Alkoholen zu Aminosäure-funktionellen Organosiliciumverbindungen führt, die eine verbesserte Löslichkeit aufweisen. Die Aufarbeitung der Produktlösungen und die Applikation der Verbindungen werden damit erheblich vereinfacht.

Bei dem Verfahren werden vorzugsweise Epoxy-funktionelle Organosiliciumverbindungen zusammengesetzt aus mindestens einer Einheit der allgemeinen Formel I und keiner oder mindestens einer Einheit der allgemeinen Formel II

**R¹_{b}(Z)_{c}SiO_{[4-(b+c)]/2}** (I),

**R²ₐSiO_{(4-a)/2}** (II),

mit **Z** in der Bedeutung 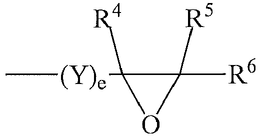 eingesetzt, worin
- **R¹** und **R²**: unabhängig voneinander Wasserstoff oder eine unverzweigte, verzweigte oder cyclische gesättigte oder ungesättigte Alkylgruppe oder Alkoxygruppe mit 1 bis 20 C-Atomen oder Arylgruppe oder Aralkylgruppe, wobei einzelne nicht benachbarte Methyleneinheiten durch Gruppen -O-, -CO-, -COO-, -OCO- oder -OCOO-, -S- oder **NR^{x}** oder durch eine Oxyalkylengruppe der allgemeinen Formel (-O-CH₂-CH**R³**-)_{d} mit **d** von 1 bis 100, worin die Reste **R³** die Bedeutung Wasserstoff oder Alkyl annehmen, ersetzt sein können,
- **R^{x}**: Wasserstoff oder einen unsubstituierten oder mit Substituenten, die ausgewählt werden aus -CN und Halogen, substituierten C₁-C₁₀ - Kohlenwasserstoffrest,
- **Y**: einen über ein Kohlenstoffatom mit der Organosiliciumverbindung verbundenen linearen, verzweigten, cyclischen, gesättigten oder einfach oder mehrfach ungesättigten C₁ bis C₁₀₀ Alkylenrest, bei dem einzelne Kohlenstoffatome durch Sauerstoff-, Stickstoff- oder Schwefelatome ersetzt sein können,
- **R⁴**, **R⁵** und **R⁶**: unabhängig voneinander Wasserstoff oder lineare, verzweigte oder cyclische gesättigte oder ungesättigte C₁ bis C₂₀ Alkylgruppe, wobei einzelne nicht benachbarte Methyleneinheiten durch Gruppen -O-, -CO-, -COO-, -OCO- oder -OCOO-, -S- oder **NR^{x}** ersetzt sein können, bedeuten,
- **a**: die Werte 0, 1, 2 oder 3,
- **b**: die Werte 0, 1 oder 2,
- **c**: die Werte 1, 2 oder 3,
- **b+c**: die Werte 1, 2, 3 oder 4 und
- **e**: die Werte 0 oder 1 aufweisen.

Vorzugsweise bedeuten **R¹** und **R²** Wasserstoff oder eine unverzweigte, verzweigte oder cyclische gesättigte oder ungesättigte Alkylgruppe mit 1 bis 6 C-Atomen oder eine Benzyl- oder Phenylgruppe, wobei nicht benachbarte Methyleneinheiten durch Stickstoffatome oder Sauerstoffatome ersetzt sein können, oder durch eine Oxyalkylengruppe der allgemeinen Formel(-O-CH₂-CH**R³**-)_{d} mit **d** von 1 bis 100, insbesondere 1 bis 50, worin die Reste **R³** die Bedeutung Wasserstoff oder Methyl annehmen, ersetzt sein können. Besonders bevorzugte Reste **R¹** und **R²** sind die Reste Methyl, Ethyl, Vinyl.

Vorzugsweise bedeutet **R^{x}** Wasserstoff oder unverzweigte, verzweigte oder cyclische gesättigte Alkylgruppe mit 1 bis 6 C-Atomen oder eine Benzyl- oder Phenylgruppe. Besonders bevorzugte Reste **R^{x}** sind Wasserstoff und die Reste Methyl, Ethyl, Propyl, Butyl.

Bevorzugt bedeutet **Y** einen linearen oder verzweigten, gesättigten C₃ bis C₂₀ Alkylenrest, bei dem einzelne Kohlenstoffatome durch Sauerstoff-, Stickstoff- oder Schwefelatome ersetzt sein können.
In einer weiteren besonders bevorzugten Ausführungsform bedeutet **Y** einen Oxyalkylenrest der allgemeinen Formel -CH₂-CH₂-CH₂-O- (CH₂-CH**R**³-O)_{g}-CH₂, worin die Reste **R³** unabhängig voneinander Wasserstoff oder Alkyl, insbesondere Methyl bedeuten und **g** einen Wert von 0 bis 100, bevorzugt 0 bis 50 und besonders bevorzugt 0 annimmt.

Bevorzugt bedeuten die Reste **R⁴**, **R⁵** und **R⁶** unabhängig voneinander Wasserstoff oder eine lineare C₁ bis C₆ Alkylgruppe, besonders bevorzugt Wasserstoff oder lineare C₁ bis C₃ Alkylgruppe, insbesondere die Reste Methyl, Ethyl, Propyl.
Die Reste **R⁵** und **R⁶** können auch über Alkylenreste, insbesondere C₁ bis C₆ Alkylenreste oder Sauerstoff untereinander und mit der Gruppierung **Y** verbunden sein.

Beispiele für Epoxydeinheiten tragende Si-gebundene Gruppierungen **Z** sind:

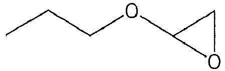

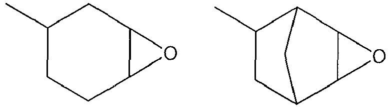

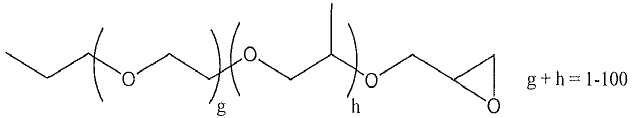

Die Epoxygruppen-tragenden Organosiliciumverbindungen können - wie der Fachkraft bekannt - beispielsweise durch Addition von Si-H-Gruppierungen an olefinische Gruppen tragende Epoxide, beispielsweise Allylglycidylether oder Cyclohexadien-Monoepoxid, oder durch Epoxidierung von olefinische Gruppierungen tragende Organosiliciumverbindungen, oder durch Dehydrohalogenierung von Chlorhydrinen hergestellt werden.

Die eingesetzten Aminosäuren haben bevorzugt die allgemeine Formel III

**H-NR⁷-(CH₂)_{f}-CR⁸R⁹-(COO)⁻(P¹⁰)⁺** (III),

worin
- **R⁷**: Wasserstoff oder eine lineare, verzweigte oder cyclische gesättigte oder ungesättigte Alkylgruppe mit 1 bis 20 C-Atomen oder Arylgruppe oder Aralkylgruppe, wobei einzelne nicht benachbarte Methyleneinheiten durch Gruppen -O-, -CO-, -COO-, -OCO- oder -OCOO-, -S- oder **NR^{x}** oder durch eine Oxyalkylengruppe der allgemeinen Formel(-O-CH₂-CH**R³-**)_{d} mit **d** von 1 bis 100, worin die Reste **R³** unabhängig voneinander die Bedeutung Wasserstoff oder Alkyl annehmen, ersetzt sein können,
- **R⁸** und **R⁹**: unabhängig voneinander Wasserstoff oder lineare, verzweigte oder cyclische gesättigte oder ungesättigte Alkylgruppen mit 1 bis 20 C-Atomen oder Arylgruppen oder Aralkylgruppen, wobei einzelne nicht benachbarte Methyleneinheiten durch Gruppen -O-, -CO-, -COO-, -OCO- oder -OCOO-, -S- oder **NR^{x}** ersetzt sein können, wobei **R⁷** mit **R⁸** oder mit **R⁹** verbunden sein kann, bedeuten,
- **R¹⁰**: ausgewählt wird aus Wasserstoff, Metall und N(**R¹¹**)₄,
- **R¹¹**: Wasserstoff, C₁ bis C₂₀ Alkyl, Aryl oder Aralkyl bedeuten und
- **f**: ganzzahlige Werte von 0 bis 50 aufweist.

**R⁷** bedeutet bevorzugt Wasserstoff oder eine lineare, verzweigte oder cyclische gesättigte oder ungesättigte Alkylgruppe mit 1 bis 10 C-Atomen oder eine Benzyl- oder Phenylgruppe, wobei nicht benachbarte Methyleneinheiten durch Stickstoffatome oder Sauerstoffatome ersetzt sein können, oder durch eine Oxyalkylengruppe der allgemeinen Formel(-O-CH₂-CH**R³**-)_{d} mit **d** von 1 bis 100, worin die Reste **R³** unabhängig voneinander die Bedeutung Wasserstoff oder Methyl annehmen, ersetzt sein können. **R⁷** bedeutet besonders bevorzugt eine C₁-C₆ Alkylgruppe, wobei Methyleneinheiten durch Oxyalkylengruppen der allgemeinen Formel -O-(CH₂-CH**R³**-)_{d} mit **d** von 1 bis 50, worin die Reste **R³** unabhängig voneinander die Bedeutung Wasserstoff oder Methyl annehmen, ersetzt sein können. Besonders bevorzugte Reste **R⁷** sind die Reste Methyl, Ethyl, Propyl, Butyl.

Vorzugsweise bedeuten **R⁸** Wasserstoff und **R⁹** Wasserstoff oder eine lineare, verzweigte oder cyclische gesättigte oder ungesättigte Alkylgruppe mit 1 bis 10 C-Atomen oder Arylgruppe oder Aralkylgruppe, wobei einzelne nicht benachbarte Methyleneinheiten durch Gruppen -O-, -CO-, -COO-, -OCO- oder-OCOO-, -S- oder **NR^{x}** ersetzt sein können, insbesondere -CH₃,-CH(CH₃)₂, -CH₂-CH(CH₃)₂, -CH(CH₃)-CH₂-CH₃, -CH₂-OH, -CH₂-CH₂-OH,-CHOH-CH₃, -CH₂-SH, -CH₂-S-S-CH₂-CH(NH₂)COOH, -CH₂-CH₂-S-CH₃, -CH₂-CH₂-CONH₂, -CH₂-CONH₂, CH₂-CH₂-COOH, CH₂-COOH, -CH₂-CH₂-CH₂-NH-CO-NH₂, -CH₂-Phenyl, -CH₂-(4-Hydroxyphenyl), -CH₂-CH₂-CH₂-CH₂-NH₂,-CH₂-CH₂-CH₂-NH₂, -CH₂-CH₂-CH₂-NH-C(=NH)-NH₂, und -CH₂-(4-Imidazolyl), -CH₂-(3-Indolyl).

**R¹⁰** bedeutet bevorzugt Wasserstoff, Alkali- oder Erdalkalimetall oder N(**R¹¹**)₄, wobei **R¹¹** bevorzugt Wasserstoff oder C₁ bis C₁₂ Alkyl, insbesondere C₁ bis C₆ Alkyl oder Phenyl bedeutet; ganz besonders bevorzugt bedeutet **R¹⁰** Wasserstoff oder Alkalimetall, insbesondere Natrium oder Kalium.

**f** weist bevorzugt ganzzahlige Werte von 0 bis 10, besonders bevorzugt 0 bis 5 und ganz besonders bevorzugt die Werte 0, 1, 2 oder 3 auf.

Bei den Aminosäuren kann **R⁷** auch mit **R⁸** oder mit **R⁹** verbunden sein, bevorzugt sind die Reste über einen Alkylenrest verbunden, ein Beispiel hierfür ist die Aminosäure Prolin.

Bevorzugte Beispiele für Aminosäuren sind Glycin, Sarkosin, Alanin, β-Alanin, Valin, Leucin, Isoleucin, γ-Aminobuttersäure, Serin, Homoserin, Threonin, Cystein, Cystin, Methionin, Glutamin, Asparagin, Prolin Phenylalanin, Tyrosin, Glutaminsäure, Asparaginsäure, Citrullin, Lysin, Ornithin, Arginin, Histidin und Tryptophan oder deren Salze.

Bei Aminosäuren, die mehr als eine Carboxylgruppen tragen, können die weiteren Carboxylgruppen unabhängig voneinander als freie Carboxylgruppen oder als Salze, bevorzugt Metall- oder Ammoniumsalze, besonders bevorzugt als Alkali-, Erdalkalisalze und tertiäre Amine, ganz besonders bevorzugt als Natrium- oder Kaliumsalze, oder in Form ihrer Ester, bevorzugt Alkylester, besonders bevorzugt als Methylester oder Ethylester vorliegen. Die Anbindung der Aminosäure an die Epoxy-Gruppierung enthaltende Organosiliciumverbindung erfolgt durch die Epoxidring-öffnende Addition der Gruppierung NH**R⁷** der Aminosäure der allgemeinen Formel III. Für **R⁷** in der Bedeutung Wasserstoff kann das hierbei gebildete Produkt mit einer weiteren Epoxidgruppierung in gleicher Weise reagieren. Somit können Produkte mit einem Siloxanrest und Produkte mit zwei Siloxanresten pro Aminosäure entstehen.
Aminosäuren mit weiteren basischen Stickstoff-haltigen Gruppierungen, z.B. Lysin, Ornithin, Arginin, Histidin und Tryptophan, können über diese Gruppierungen auch einfach oder zweifach mit dem Epoxid-Rest der Organosiliciumverbindung reagieren. Maximal kann pro Wasserstoffatom an einer basischen Stickstoffgruppierung der Aminosäure der allgemeinen Formel III ein Organosiliciumrest gebunden werden.

Erfindungsgemäß werden bei dem Verfahren pro Mol der vorhandenen Epoxydeinheiten mindestens 1,2 Mol und höchstens 100 Mol der Aminosäure, bevorzugt mindestens 2 Mol und höchstens 50 Mol, besonders bevorzugt mindestens 3 Mol und höchstens 10 Mol, insbesondere der allgemeinen Formel III eingesetzt. Bei dem erfindungsgemäßen Verfahren können beliebige optische Isomere der Aminosäuren eingesetzt werden. Ebenso ist es möglich, Gemische von Aminosäuren einzusetzen.

Die Umsetzung wird in Gegenwart von einem oder mehreren Alkoholen, vorzugsweise der allgemeinen Formel **R¹²-OH** durchgeführt. Bevorzugt ist **R¹²** eine lineare oder verzweigte Alkylgruppe mit 1 bis 20 C-Atomen, wobei nicht benachbarte Kohlenstoffatome durch Sauerstoffe ersetzt sein können. Besonders bevorzugt ist **R¹²** eine lineare oder verzweigte Alkylgruppe mit 1 bis 5 C-Atomen, wobei bevorzugt 1 bis 2 C-Atome durch Sauerstoffe ersetzt sein können. Besonders bevorzugt sind Alkylgruppen mit 1 bis 5 C-Atomen, wobei besonders bevorzugt 1 C-Atom durch Sauerstoff ersetzt ist. Beispiele für Alkohole sind Methanol, Ethanol, *n-*Propanol, *iso*-Propanol, *n*-Butanol, *iso*-Butanol, *tert*-Butanol, *tert*-Amylalkohol, Benzylalkohol, Ethylenglycol, Propylenglycol, 2-Methoxyethanol, 2-Methoxypropanol, 2-Ethoxyethanol und Glycerin, Polyethylenglycol oder Polypropylenglycol oder Cokondensate aus Polyethylenglycol und Polypropylenglycol enthalten. Alkohol wird bevorzugt in Anteilen von mindestens 1 Gew. % und höchstens 10000 Gew. %, besonders bevorzugt in Anteilen von mindestens 10 Gew. % und höchstens 5000 Gew. % und ganz besonders bevorzugt in Anteilen von mindestens 50 Gew. % und höchstens von 1000 Gew. % bezogen auf die Masse der eingesetzten Epoxyd-funktionalisierten Organosiliciumverbindung eingesetzt. Das Reaktionsgemisch kann darüber hinaus Wasser enthalten, bevorzugt mindestens 0,1 Gew. % und höchstens 1000 Gew. %, besonders bevorzugt in Anteilen von mindestens 1 Gew. % und höchstens 500 Gew. % und ganz besonders bevorzugt in Anteilen von mindestens 5 Gew. % und höchstens von 1000 Gew. % bezogen auf die Masse der eingesetzten Epoxyd-funktionalisierten Organosiliciumverbindung.

Die Reaktion kann im Batch-Modus oder im Semi-Batch-Modus oder kontinuierlich durchgeführt werden.

Bevorzugt wird einer der beiden Reaktionspartner, bevorzugt die Aminosäure, in Alkohol vorgelegt und anschließend die Epoxydfunktionelle Organosiliciumverbindung zugegeben.

Die Reaktionszeiten betragen bevorzugt mindestens 1 min bis höchstens 100 Stunden, besonders bevorzugt mindestens 30 min bis höchstens 20 Stunden und ganz besonders bevorzugt mindestens 1 Stunde bis höchstens 10 Stunden.

Die Umsetzung wird bevorzugt bei Temperaturen von mindestens 0°C und höchstens 200°C, bevorzugt mindestens 20°C und höchstens 140°C und besonders bevorzugt mindestens 40°C und höchstens 100°C durchgeführt.

Die Umsetzung wird bei einem Druck zwischen mindestens 0,1 mbar bis höchstens 50 bar, bevorzugt mindestens 100 mbar bis höchstens 20 bar, besonders bevorzugt bei mindestens 0,9 bar bis 10 bar durchgeführt.

Es können bei der Umsetzung weitere Komponenten, beispielsweise Lösemittel, in Mengen von mindestens 1 % und höchstens 500 %, bevorzugt mindestens 10 % und höchstens 200 % bezogen auf die Gesamtreaktionsmasse eingesetzt werden. Beispiele für Lösemittel sind lineare oder cyclische, gesättigte oder ungesättigte Kohlenwasserstoffe, z.B. Pentan, Cyclohexan, Toluol, Ether wie Methyl-*tert*-butylether, Tetrahydrofuran oder Dioxan, Halogenkohlenwasserstoffe, wie Dichlormethan, 1,2-Dichlorethan oder Chlorbenzol, oder sogenannte dipolar aprotische Lösemittel wie Acetonitril, Dimethylsulfoxid oder Dimethylformamid.

Durch die Umsetzung erhaltene Organosiliciumverbindungen (O) können durch Entfernung des Alkohols und gegebenenfalls des Lösemittels isoliert werden. Die Entfernung geschieht vorzugsweise durch Destillation. Es können sich bei Bedarf weitere Reinigungsschritte anschließen. Beispielsweise kann nicht umgesetzte Aminosäure durch Waschen des Produkts mit Wasser oder durch flüssig-flüssig-Extraktion abgetrennt werden. Es ist beispielsweise auch möglich, die nicht-umgesetzte Aminosäure durch Zugabe eines Lösemittels, in welchem die Aminosäure schlecht löslich ist, beispielsweise Methyl-*tert-*butylether oder Alkohol oder deren Gemische, vom Produkt als Feststoff abzutrennen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, und alle Temperaturen 20°C.

### Beispiel 1 (α,ω, n = 54)

16,6 g (113 mmol) Lysin werden in 800 ml Ethanol gelöst und die Mischung auf 78°C erhitzt. Bei dieser Temperatur werden 41,0 g α,ω-Glycidoxypropyl-funktionalisiertes Polysiloxan (MG ∼ 4300, ca. 9,45 mmol Epoxidgruppen) innerhalb von 4 Std. zugegeben und die Reaktionstemperatur noch weitere 4 Stunden bei 78°C gehalten. Durch NMR-Untersuchung wird ein vollständiger Umsatz aller vorhandenen Epoxidgruppen festgestellt. Ethanol wird im Vakuum abdestilliert und der Rückstand zur Entfernung von Lysin mit Wasser gewaschen. Nach der Trocknung werden 44 g Aminosäurefunktionelles Polysiloxan mit einer honigartigen Konsistenz erhalten. Die NMR-spektroskopische Untersuchung zeigt den quantitativen Umsatz der Epoxidgruppen und die kovalente Anbindung von Lysin an.

### Beispiel 2 (α,ω, n = 54)

105 g (718 mmol) Lysin werden zusammen mit 45,8 g (694 mmol) 85 proz. Kaliumhydroxid in 1100 ml Isopropanol bei Raumtemperatur gelöst. Man erhitzt auf Rückflusstemperatur, gibt 250 g α,ω-Glycidoxypropyl-funktionalisiertes Polysiloxan (MG ∼ 4180, ca. 120 mmol Epoxidgruppen) innerhalb von 5 Std. zu und kocht nach beendeter Zugabe noch 2 Stunden weiter. Durch NMR-Untersuchung wird ein vollständiger Umsatz aller vorhandenen Epoxidgruppen festgestellt. Nach dem Erkalten versetzt man mit einer Mischung aus 77,5 g 32 proz. Salzsäure (ca. 680 mmol)und 86 g Wasser. Isopropanol wird im Vakuum abdestilliert und der Rückstand (368 g) zur Entfernung von Lysin mehrfach mit Wasser gewaschen. Nach der Trocknung im Vakuum werden 302 g Aminosäurefunktionelles Polysiloxan erhalten.
Löslichkeit in Ethanol bei Raumtemperatur: 7,2 Gew.-%.

### Beispiel 3 (Na-salz, α,ω, n = 54)

24,0 g (164 mmol) Lysin werden in 1600 ml Ethanol unter Zusatz von 8,69 g (161 mmol) Natriummethylat bei 78°C gelöst. Bei dieser Temperatur werden 59,2 g α,ω-Glycidoxypropyl-funktionalisiertes Polysiloxan (MG ∼ 4300, ca. 27,5 mmol Epoxidgruppen) in 40 g Ethanol innerhalb von 5 Std. zugegeben und die Reaktionstemperatur noch weitere 1,5 Stunden bei 78°C gehalten. Durch NMR-Untersuchung wird ein vollständiger Umsatz aller vorhandenen Epoxidgruppen festgestellt. Ethanol wird im Vakuum abdestilliert und der Rückstand zur Entfernung von Lysin mit Wasser gewaschen. Nach der Trocknung werden 69 g Aminosäurefunktionelles Polysiloxan erhalten. Die NMR-spektroskopische Untersuchung zeigt den quantitativen Umsatz der Epoxidgruppen und die kovalente Anbindung von Lysin an.

### Beispiel 4 (seitenständig, K-salz in Isopropanol)

44,6 g (305 mmol) Lysin werden in 800 ml Isopropanol unter Zusatz von 19,5 g (295 mmol) 85 proz. KOH bei Raumtemperatur gelöst. Man erwärmt auf Rückflusstemperatur und dosiert 200 g Sipell RE 63 F, ein seitenständig mit Glycidoxypropylgruppen funktionalisiertes Polysiloxan (MG ∼ 11800, Funktionsdichte 0,250 mmol/g; 50,0 mmol Epoxidgruppen) innerhalb von 6 Std. zugegeben und die Reaktionstemperatur noch eine weitere Stunde bei 78°C gehalten. Durch NMR-Untersuchung wird ein vollständiger Umsatz aller vorhandenen Epoxidgruppen festgestellt. Nach dem Abkühlen versetzt man die Reaktionslösung mit einer Mischung aus 24,3 g 32 prozentige Salzsäure und 35 g Wasser und dampft am Rotationsverdampfer ein. Der Rückstand wird mit 1200 ml Methyl-*tert*.-butylether am Rückfluss kontinuierlich extrahiert, anschließend wird Methyl-*tert*.-butylether im Vakuum abdestilliert. Der Rückstand besteht aus 187 g Produkt. Löslichkeit in Ethanol bei Raumtemperatur: 31 Gew.-%.

### Beispiel 5 (Macromer, n = 17)

32,0 g (219 mmol) Lysin werden in 314 g Methanol bei 65°C gelöst und dann mit 50,0 g (36,5 mmol) α-Glycidoxypropyl-ω-n-Butyl-funktionalisiertem linearem Polydimethylsiloxan (Kettenlänge ca. 17 Si-O-Einheiten, MG ∼ 1370) versetzt. Man lässt 20 Std. unter Rückfluss kochen und kühlt dann auf Raumtemperatur ab. Methanol wird am Rotationsverdampfer im Vakuum abgetrennt. Der Rückstand wird mit Wasser gewaschen und getrocknet. Man erhält das Produkt als zähflüssiges Öl. Die NMR-spektroskopische Untersuchung zeigt den quantitativen Umsatz der Epoxidgruppen und die kovalente Anbindung von Lysin an.

### Beispiel 6 (Macromer, n = 17, Na-salz)

12,8 g (87,5 mmol) Lysin werden in 255 ml Methanol unter Zusatz von 4,5 g (83 mmol) Natriummethylat bei 65°C gelöst. Bei dieser Temperatur werden 20,0 g (14,6 mmol) α-Glycidoxypropyl-ω-n-Butyl-funktionalisiertem linearem Polydimethylsiloxan (Kettenlänge ca. 17 Si-O-Einheiten, MG ∼ 1370) innerhalb von 2,5 Stunden zugegeben und noch weitere 2 Stunden unter Rückfluss erhitzt. Durch NMR-Untersuchung wird ein vollständiger Umsatz aller vorhandenen Epoxidgruppen festgestellt. Man trennt 7 g einer öligen unteren Phase ab (besteht aus im Edukt enthaltenen Verunreinigungen) und dampft die obere Phase am Rotationsverdampfer ein. Es werden 21,5 g Rohprodukt erhalten. Zur Entfernung von überschüssigem Lysin wird das Rohprodukt in Methyl-*tert*.-butylether aufgenommen und mit wässriger ca. 20 proz. Kochsalzlöung geschüttelt. Die organische Phase wird abgetrennt und eingedampft. Man erhält 18 g Produkt.

### Beispiel 7 (Macromer n = 100)

5,85 g (40,0 mmol) Lysin werden in 325 g Ethanol bei Rückflusstemperatur gelöst und dann mit 50,0 g (6,66 mmol) α-Glycidoxypropyl-ω-n-Butyl-funktionalisiertem linearem Polydimethylsiloxan (Kettenlänge ca. 100 Si-O-Einheiten) versetzt. Man lässt 20 Std. unter Rückfluss kochen und kühlt dann auf Raumtemperatur ab. Es bilden sich zwei flüssige Phasen. Die obere Phase wird abgetrennt, die untere Phase wird am Rotationsverdampfer eingedampft und in Methyl-*tert*-butylether dispergiert. Die unlöslichen Bestandteile (nicht umgesetztes Lysin) werden abdekantiert und die MTBE-Phase wird eingedampft. Man erhält das Produkt als zähflüssiges Öl. Die NMR-spektroskopische Untersuchung zeigt den quantitativen Umsatz der Epoxidgruppen und die kovalente Anbindung von Lysin an.

### Beispiel 8 (Macromer, n= 100, Na-salz)

4,67 g (32 mmol) Lysin werden in 330 ml Ethanol unter Zusatz von 1,69 g (31,3 mmol) Natriummethylat bei 78°C gelöst. Bei dieser Temperatur werden 40,0 g (5,33 mmol) α-Glycidoxypropyl-ω-n-Butyl-funktionalisiertes lineares Polydimethylsiloxan (Kettenlänge ca. 100 Si-O-Einheiten, MG ∼ 7500) innerhalb von 3,5 Stunden zugegeben und noch weitere 2 Stunden unter Rückfluss erhitzt. Durch NMR-Untersuchung wird ein vollständiger Umsatz aller vorhandenen Epoxidgruppen festgestellt. Beim Erkalten scheidet sich eine ölige Produktphase ab. Diese wird abgetrennt, und am Rotationsverdampfer entflüchtigt. Es werden 32 g Produkt erhalten.

### Vergleichsbeispiel (nicht erfindungsgemäß)

Beispiel 2 wird mit 17,5 g (120 mmol) Lysin, entspr. 1,0 Äquivalente Lysin pro Epoxidgruppierung, und 7,63 g (116 mmol) 85 proz. KOH wiederholt.

Löslichkeit des erhaltenen Produkts in Ethanol bei Raumtemperatur: 3,4 Gew.-%.

### Vergleichsbeispiel (nicht erfindungsgemäß)

Beispiel 4 wird mit 7,31 g (50,0 mmol) Lysin, entspr. 1,0 Äquivalente Lysin pro Epoxidgruppierung, und 3,19 g (48,3 mmol) 85 proz. KOH wiederholt.

Löslichkeit des erhaltenen Produkts in Ethanol bei Raumtemperatur: 6,9 Gew.-%.

## Patentansprüche

1. Verfahren zur Herstellung von Aminosäure-Gruppierung enthaltenden Organosiliciumverbindungen (O), bei dem Epoxydeinheiten tragende Organosiliciumverbindungen mit einem stöchiometrischen Überschuss an Aminosäuren oder deren Salzen in Gegenwart eines Alkohols umgesetzt werden, wobei pro Mol der vorhandenen Epoxydeinheiten mindestens 1,2 Mol und höchstens 100 Mol der Aminosäuren eingesetzt werden.

2. Verfahren nach Anspruch 1, bei dem Epoxy-funktionelle Organosiliciumverbindungen zusammengesetzt aus mindestens einer Einheit der allgemeinen Formel I und keiner oder mindestens einer Einheit der allgemeinen Formel II
**R¹_{b}(Z)_{c}SiO_{[4-(b+c)]/2}** (I),
**R²ₐSiO_{(4-a)/2}** (II),
eingesetzt werden,
wobei **Z** die Bedeutung, 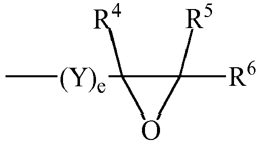
**R¹** und **R²** unabhängig voneinander Wasserstoff oder eine unverzweigte, verzweigte oder cyclische gesättigte oder ungesättigte Alkylgruppe oder Alkoxygruppe mit 1 bis 20 C-Atomen oder Arylgruppe oder Aralkylgruppe, wobei einzelne nicht benachbarte Methyleneinheiten durch Gruppen -O-, -CO-, -COO-, -OCO- oder -OCOO-, -S- oder **NR^{x}** oder durch eine Oxyalkylengruppe der allgemeinen Formel(-O-CH₂-CH**R³**-)_{d} mit **d** von 1 bis 100, worin die Reste **R³** die Bedeutung Wasserstoff oder Alkyl annehmen, ersetzt sein können,
**R^{x}** Wasserstoff oder einen unsubstituierten oder mit Substituenten, die ausgewählt werden aus -CN und Halogen, substituierten C₁-C₁₀ - Kohlenwasserstoffrest,
**Y** einen über ein Kohlenstoffatom mit der Organosiliciumverbindung verbundenen linearen, verzweigten, cyclischen, gesättigten oder einfach oder mehrfach ungesättigten C₁ bis C₁₀₀ Alkylenrest, bei dem einzelne Kohlenstoffatome durch Sauerstoff-, Stickstoff- oder Schwefelatome ersetzt sein können,
**R⁴, R⁵** und **R⁶** unabhängig voneinander Wasserstoff oder lineare, verzweigte oder cyclische gesättigte oder ungesättigte C₁ bis C₂₀ Alkylgruppe, wobei einzelne nicht benachbarte Methyleneinheiten durch Gruppen -O-, -CO-, -COO-, -OCO- oder -OCOO-, -S- oder **NR^{x}** ersetzt sein können, bedeuten,
**a** die Werte 0, 1, 2 oder 3,
**b** die Werte 0, 1 oder 2,
**c** die Werte 1, 2 oder 3,
**b+c** die Werte 1, 2, 3 oder 4 und
**e** die Werte 0 oder 1 aufweisen.

3. Verfahren nach einem oder mehreren der vorangehenden Ansprüche, bei dem die eingesetzten Aminosäuren die allgemeine Formel III
**H-NR⁷-(CH₂)_{f}-CR⁸R⁹-(COO)⁻(R¹⁰)⁺** (III),
aufweisen, worin
**R⁷** Wasserstoff oder eine lineare, verzweigte oder cyclische gesättigte oder ungesättigte Alkylgruppe mit 1 bis 20 C-Atomen oder Arylgruppe oder Aralkylgruppe, wobei einzelne nicht benachbarte Methyleneinheiten durch Gruppen -O-, -CO-, -COO-, -OCO- oder -OCOO-, -S- oder **NR^{x}** oder durch eine Oxyalkylengruppe der allgemeinen Formel(-O-CH₂-CH**R³**-)**_{d}** mit **d** von 1 bis 100, worin die Reste **R³** unabhängig voneinander die Bedeutung Wasserstoff oder Alkyl annehmen, ersetzt sein können,
**R⁸** und **R⁹** unabhängig voneinander Wasserstoff oder lineare, verzweigte oder cyclische gesättigte oder ungesättigte Alkylgruppen mit 1 bis 20 C-Atomen oder Arylgruppen oder Aralkylgruppen, wobei einzelne nicht benachbarte Methyleneinheiten durch Gruppen -O-, -CO-, -COO-, -OCO- oder -OCOO-, -S- oder **NR^{x}** ersetzt sein können, wobei **R⁷** mit **R⁸** oder mit **R⁹** verbunden sein kann, bedeuten,
**R¹⁰** ausgewählt wird aus Wasserstoff, Metall und N(**R¹¹**)₃,
**R¹¹** Wasserstoff, C₁ bis C₂₀ Alkyl, Aryl oder Aralkyl bedeuten und
**f** ganzzahlige Werte von 0 bis 50 aufweist.

4. Verfahren nach einem oder mehreren der vorangehenden Ansprüche, bei dem aliphatische Alkohole der allgemeinen Formel **R¹⁰-OH** eingesetzt werden, bei der **R¹⁰** eine lineare oder verzweigte Alkylgruppe mit 1 bis 20 C-Atomen bedeutet, wobei nicht benachbarte Kohlenstoffatome durch Sauerstoffe ersetzt sein können.

5. Verfahren nach einem oder mehreren der vorangehenden Ansprüche, bei dem **Z** ausgewählt wird aus den Formeln

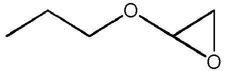

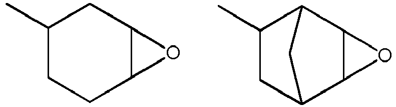

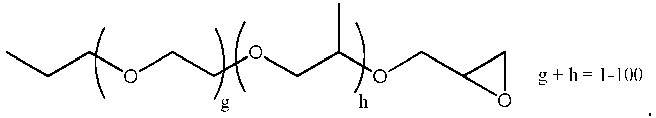

6. Verfahren nach einem oder mehreren der vorangehenden Ansprüche, bei dem **R⁷** Wasserstoff oder eine lineare, verzweigte oder cyclische gesättigte oder ungesättigte Alkylgruppe mit 1 bis 10 C-Atomen oder eine Benzyl- oder Phenylgruppe bedeutet.

7. Verfahren nach einem oder mehreren der vorangehenden Ansprüche, bei dem **R⁸** und **R⁹** jeweils ausgewählt werden aus-CH₃, -CH(CH₃)₂, -CH₂-CH(CH₃)₂, -CH(CH₃)-CH₂-CH₃, -CH₂-OH, -CH₂-CH₂-OH, -CHOH-CH₃, -CH₂-SH, -CH₂-S-S-CH₂-CH(NH₂)COOH, -CH₂-CH₂-S-CH₃, -CH₂-CH₂-CONH₂, -CH₂-CONH₂, CH₂-CH₂-COOH, CH₂-COOH, -CH₂-CH₂-CH₂-NH-CO-NH₂, -CH₂-Phenyl, -CH₂-(4-Hydroxyphenyl), -CH₂-CH₂-CH₂-CH₂-NH₂, -CH₂-CH₂-CH₂-NH₂, -CH₂-CH₂-CH₂-NH-C (=NH)-NH₂, -CH₂- (4-Imidazolyl) und -CH₂- (3-Indolyl) .

8. Verfahren nach einem oder mehreren der vorangehenden Ansprüche, bei dem **R¹** und **R²** ausgewählt werden aus Wasserstoff Methyl, Ethyl und Vinyl.

9. Verfahren nach einem oder mehreren der vorangehenden Ansprüche, bei dem der aliphatische Alkohol in Anteilen von 10 Gew. % bis 5000 Gew. % bezogen auf die Masse der eingesetzten Epoxyd-funktionalisierten Organosiliciumverbindung eingesetzt wird.

## Claims

1. Process for producing amino acid moiety-containing organosilicon compounds (O), wherein epoxide unit-bearing organosilicon compounds are reacted with a stoichiometric excess of amino acids or salts thereof in the presence of an alcohol, wherein per mole of the epoxide units present not less than 1.2 mol and not more than 100 mol of the amino acid are employed.

2. Process according to Claim 1, wherein epoxy-functional organosilicon compounds composed of at least one unit of general formula I and no unit or at least one unit of general formula II
**R¹_{b}(Z)_{c}SiO_{[4-(b+c)]/2}** (I),
**R²ₐSiO_{(4-a)/2}** (II),
are employed,
wherein **Z** represents 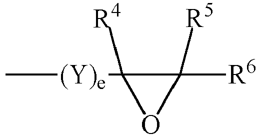
**R¹** and **R²** independently of one another represent hydrogen or an unbranched, branched or cyclic saturated or unsaturated alkyl group or alkoxy group having 1 to 20 carbon atoms or aryl group or aralkyl group, wherein individual nonadjacent methylene units may be replaced by -O-, -CO-, -COO-, -OCO- or -OCOO-, -S- or **NR^{x}** groups or by an oxyalkylene group of general formula (-O-CH₂-CH**R**³-)**_{d}** where **d** is from 1 to 100, wherein the radicals **R³** represent hydrogen or alkyl,
**R^{x}** represents hydrogen or a C₁-C₁₀ hydrocarbon radical which is unsubstituted or substituted with substituents selected from -CN and halogen,
**Y** represents a linear, branched, cyclic, saturated or mono- or polyunsaturated C₁ to C₁₀₀ alkylene radical bonded to the organosilicon compound via a carbon atom, wherein individual carbon atoms may be replaced by oxygen, nitrogen or sulfur atoms,
**R⁴**, **R⁵** and **R⁶** independently of one another represent hydrogen or a linear, branched or cyclic saturated or unsaturated C₁ to C₂₀ alkyl group, wherein individual nonadjacent methylene units may be replaced by -O-, -CO-, -COO-, -OCO- or -OCOO-, -S- or **NR^{x}** groups,
**a** takes values of 0, 1, 2 or 3,
**b** takes values of 0, 1, or 2,
**c** takes values of 1, 2, or 3,
**b+c** takes values of 1, 2, 3 or 4, and
**e** takes values of 0 or 1.

3. Process according to one or more of the preceding claims, wherein the employed amino acids have general formula III
**H-NR⁷-(CH₂)_{f}-CR⁸R⁹-(COO)⁻(R¹⁰)⁺** (III),
wherein
**R⁷** represents hydrogen or a linear, branched or cyclic saturated or unsaturated alkyl group having 1 to 20 carbon atoms or aryl group or aralkyl group, wherein individual nonadjacent methylene units may be replaced by -O-, -CO-, -COO-, -OCO- or -OCOO-, -S- or **NR^{x}** groups or by an oxyalkylene group of general formula (-O-CH₂-CH**R³**-)**_{d}** where **d** is from 1 to 100, wherein the radicals **R³** independently of one another represent hydrogen or alkyl,
**R⁸** and **R⁹** independently of one another represent hydrogen or linear, branched or cyclic saturated or unsaturated alkyl groups having 1 to 20 carbon atoms or aryl groups or aralkyl groups, wherein individual nonadjacent methylene units may be replaced by -O-, -CO-, -COO-, -OCO- or -OCOO-, -S- or **NR^{x}** groups, wherein **R⁷** may be bonded to **R⁸** or to **R⁹,**
**R¹⁰** is selected from hydrogen, metal and N(**R¹¹**) ₃,
**R¹¹** represents hydrogen, C₁ to C₂₀ alkyl, aryl or aralkyl and
**f** takes integer values from 0 to 50.

4. Process according to one or more of the preceding claims, wherein aliphatic alcohols of general formula **R¹⁰-OH** are employed, wherein **R¹⁰** represents a linear or branched alkyl group having 1 to 20 carbon atoms, wherein nonadjacent carbon atoms may be replaced by oxygens.

5. Process according to one or more of the preceding claims, wherein **Z** is selected from the formulae

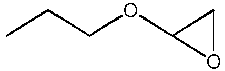

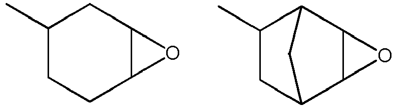

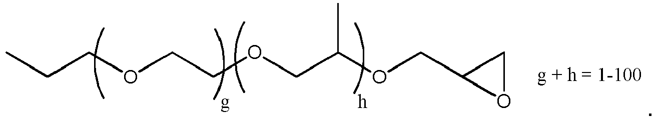

6. Process according to one or more of the preceding claims, wherein **R⁷** represents hydrogen or a linear, branched or cyclic saturated or unsaturated alkyl group having 1 to 10 carbon atoms or a benzyl or phenyl group.

7. Process according to one or more of the preceding claims, wherein **R⁸** and **R⁹** are each independently selected from -CH₃, -CH(CH₃)₂, -CH₂-CH(CH₃)₂, -CH(CH₃)-CH₂-CH₃, -CH₂-OH, -CH₂-CH₂-OH, -CHOH-CH₃, -CH₂-SH,-CH₂-S-S-CH₂-CH (NH₂)COOH, -CH₂-CH₂-S-CH₃, -CH₂-CH₂-CONH₂, -CH₂-CONH₂, CH₂-CH₂-COOH, CH₂-COOH, -CH₂-CH₂-CH₂-NH-CO-NH₂, -CH₂-phenyl, -CH₂-(4-hydroxyphenyl),-CH₂-CH₂-CH₂-CH₂-NH₂, -CH₂-CH₂-CH₂-NH₂, -CH₂-CH₂-CH₂-NH-C(=NH)-NH₂, -CH₂-(4-imidazolyl) and -CH₂-(3-indolyl).

8. Process according to one or more of the preceding claims, wherein **R¹** and **R²** are selected from hydrogen, methyl, ethyl and vinyl.

9. Process according to one or more of the preceding claims, wherein the aliphatic alcohol is employed in proportions of 10 wt% to 5000 wt% based on the mass of the employed epoxide-functionalized organosilicon compound.

## Revendications

1. Procédé pour la production de composés organosiliciés (O) contenant des groupements acide aminé, dans lequel on fait réagir des composés organosiliciés portant des unités époxyde avec un excès stoechiométrique d'acides aminés ou de leurs sels en présence d'un alcool, en utilisant au moins 1,2 mole et au maximum 100 moles des acides aminés par mole des unités époxyde présentes.

2. Procédé selon la revendication 1, dans lequel on utilise des composés organosiliciés à fonction époxy composés d'au moins une unité de formule générale I et d'aucune ou d'au moins une unité de formule générale II
**R¹_{b}(Z)_{c}SiO_{[4-(b+c)]/2}** (I),
**R²ₐSio_{(4-a)/2}** (II),
où **Z** représente 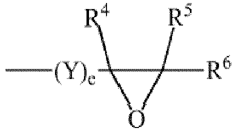
**R¹** et **R²** représentent indépendamment l'un de l'autre un atome d'hydrogène ou un groupe alkyle ou un groupe alcoxy, non ramifié, ramifié ou cyclique, saturé ou insaturé, ayant de 1 à 20 atomes de carbone, ou un groupe aryle ou un groupe aralkyle, où des unités méthylène individuelles non contiguës peuvent être remplacées par des groupes -O-, -CO-, -COO-, -OCO- ou -OCOO-, -S- ou **NR^{x}** ou par un groupe oxyalkylène de formule générale (-O-CH₂-CH**R³**-)**_{d}** où **d** vaut de 1 à 100, dans laquelle les radicaux **R³** représentent un atome d'hydrogène ou un groupe alkyle,
**R^{x}** représente un atome d'hydrogène ou un radical hydrocarboné en C₁-C₁₀ non substitué ou substitué avec des substituants qui sont choisis parmi -CN et halogène,
**Y** représente un radical alkylène en C₁ à C₁₀₀ linéaire, ramifié ou cyclique, saturé ou une ou plusieurs fois insaturé, lié au composé organosilicié par un atome de carbone, dans lequel des atomes de carbone individuels peuvent être remplacés par des atomes d'oxygène, d'azote ou de soufre,
**R⁴, R⁵** et **R⁶** représentent chacun indépendamment un atome d'hydrogène ou un groupe alkyle en C₁ à C₂₀ linéaire, ramifié ou cyclique, saturé ou insaturé, dans lequel des unités méthylène individuelles non contiguës peuvent être remplacées par des groupes -O-, -CO-, -COO-, -OCO- ou -OCOO-, -S- ou **NR^{X},**
**a** présente les valeurs 0, 1, 2 ou 3,
**b** présente les valeurs 0, 1 ou 2,
**c** présente les valeurs 1, 2 ou 3,
**b+c** présente les valeurs 1, 2, 3 ou 4 et
**e** présente les valeurs 0 ou 1.

3. Procédé selon une ou plusieurs des revendications précédentes, dans lequel les acides aminés utilisés présentent la formule générale III
**H-NR⁷-(CH₂)_{f}-CR⁸R⁹-(COO)⁻(R¹⁰)⁺** (III),
dans laquelle
**R⁷** représente un atome d'hydrogène ou un groupe alkyle linéaire, ramifié ou cyclique, saturé ou insaturé, ayant de 1 à 20 atomes de carbone, ou un groupe aryle ou un groupe aralkyle, où des unités méthylène individuelles non contiguës peuvent être remplacées par des groupes -O-, -CO-, -COO-, -OCO- ou -OCOO-, -S- ou **NR^{x}** ou par un groupe oxyalkylène de formule générale (-O-CH₂-CH**R³**-)**_{d}** où **d** vaut de 1 à 100, dans laquelle les radicaux **R³** représentent indépendamment les uns des autres un atome d'hydrogène ou un groupe alkyle,
**R⁸** et **R⁹** représentent indépendamment l'un de l'autre un atome d'hydrogène ou des groupes alkyle linéaires, ramifiés ou cycliques, saturés ou insaturés, ayant de 1 à 20 atomes de carbone, ou des groupes aryle ou des groupes aralkyle, où des unités méthylène individuelles non contiguës peuvent être remplacées par des groupes -O-, -CO-, -COO-, -OCO- ou -OCOO-, -S- ou **NR^{x},**
**R⁷** pouvant être lié à **R⁸** ou à **R⁹,**
**R¹⁰** est choisi parmi un atome d'hydrogène, un métal et N(**R¹¹**)₃,
**R¹¹** représentent un atome d'hydrogène, un groupe alkyle en C₁ à C₂₀, aryle ou aralkyle et
**f** représente des nombres entiers valant de 0 à 50.

4. Procédé selon une ou plusieurs des revendications précédentes, dans lequel on utilise des alcools aliphatiques de formule générale **R¹⁰-OH,** dans laquelle le radical **R¹⁰** représente un groupe alkyle linéaire ou ramifié ayant de 1 à 20 atomes de carbone, dans lequel des atomes de carbone non contigus peuvent être remplacés par des atomes d'oxygène.

5. Procédé selon une ou plusieurs des revendications précédentes, dans lequel **Z** est choisi parmi les formules

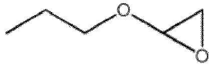

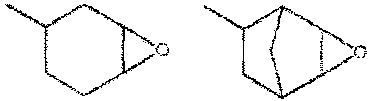

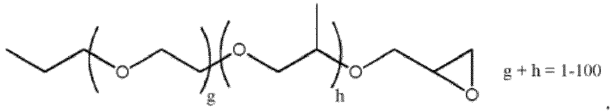

6. Procédé selon une ou plusieurs des revendications précédentes, dans lequel **R⁷** représente un atome d'hydrogène ou un groupe alkyle linéaire, ramifié ou cyclique, saturé ou insaturé, ayant de 1 à 10 atomes de carbone ou un groupe benzyle ou phényle.

7. Procédé selon une ou plusieurs des revendications précédentes, dans lequel **R⁸** et **R⁹** sont choisis chacun -CH₃, -CH(CH₃)₂, -CH₂-CH(CH₃)₂, -CH(CH₃)-CH₂-CH₃, -CH₂-OH, -CH₂-CH₂-OH, -CHOH-CH₃, -CH₂-SH, -CH₂-S-S-CH₂-CH(NH₂)COOH, -CH₂-CH₂-S-CH₃, -CH₂-CH₂-CONH₂, -CH₂-CONH₂-CH₂-CH₂-COOH, CH₂-COOH, -CH₂-CH₂-CH₂-NH-CO-NH₂, -CH₂-phényle, -CH₂-(4-hydroxyphényle), -CH₂-CH₂-CH₂-CH₂-NH₂, -CH₂-CH₂-CH₂-NH₂, -CH₂-CH₂-CH₂-NH-C(=NH)-NH₂, -CH₂-(4-imidazolyle) et -CH₂-(3-indolyle).

8. Procédé selon une ou plusieurs des revendications précédentes, dans lequel **R¹** et **R²** sont choisis parmi un atome d'hydrogène et les groupes méthyle, éthyle et vinyle.

9. Procédé selon une ou plusieurs des revendications précédentes, dans lequel on utilise l'alcool aliphatique en des proportions de 10 % en poids à 5 000 % en poids par rapport à la masse du composé organosilicié fonctionnalisé avec époxy, utilisé.
